# FASCICULE DE BREVET EUROPEEN

(11) **EP 3 162 614 B1**
(45) Date de publication et mention de la délivrance du brevet: **19.09.2018**
(21) Numéro de dépôt: 16195649.5
(22) Date de dépôt: 26.10.2016
(51) Int. Cl.: B60N 2/07

(54) **SIÈGE POUR VÉHICULE AYANT UN MÉCANISME DE LIMITATION DE COULISSEMENT**
SITZ FÜR FAHRZEUG, DER EINEN BEGRENZUNGSMECHANISMUS FÜR DAS VERSCHIEBEN HAT
SEAT FOR MOTOR VEHICLE HAVING A MECHANISM TO REDUCE SLIDING

(30) Priorité: 27.10.2015 FR 1560265
(43) Date de publication de la demande: 03.05.2017
(73) Titulaire: Lear Corporation, Southfield, MI 48033 (US)
(72) Inventeur: DECOMBE, François, 42290 SORBIERS (FR); IECKER, Julien, 42100 SAINT ETIENNE (FR)
(74) Mandataire: Champain, Christophe

(56) Documents cités:
- FR-A1- 2 878 791

## Description

La présente invention concerne un siège pour véhicule, et un véhicule équipé de ce siège.

Les sièges pour véhicule automobile comprennent classiquement un dossier et une assise, le dossier étant mobile par rapport à l'assise entre une position nominale permettant de recevoir un passager assis, une position escamotée dans laquelle le dossier est rabattu en direction de l'assise, et une position de confort dans laquelle le dossier est davantage incliné vers l'arrière par rapport à la position nominale, c'est-à-dire dans un sens opposé à celui conduisant à la position escamotée, afin d'améliorer le confort du passager.

Les sièges comprennent généralement des rails de guidage (voir FR-A-2878 791) pouvant être fixés au plancher du véhicule, l'assise étant montée mobile en translation le long des rails de guidage afin de permettre un réglage en position longitudinale.

Lorsque l'ensemble comprenant l'assise et le dossier peut être désolidarisé des rails de guidage, le siège est dit extractible. Cela permet de dégager un volume de chargement plus important à l'intérieur du véhicule.

Les véhicules automobiles comprennent par ailleurs des enrouleurs de ceinture de sécurité. Ces enrouleurs sont généralement fixés à la caisse du véhicule.

Il peut arriver que pour certaines positions de l'assise et du dossier le long des rails de guidage, un utilisateur assis sur le siège ne puisse pas réussir à atteindre l'enrouleur de ceinture de sécurité, en vue de se ceinturer. Cela est par exemple le cas quand l'assise et le dossier ont été coulissés trop en avant sur les rails de guidage. L'utilisateur est alors contraint de faire coulisser le siège le long des rails jusqu'à déterminer de façon empirique une position longitudinale du siège lui permettant d'atteindre l'enrouleur de ceinture de sécurité.

Aussi, la présente invention vise à pallier cet inconvénient en proposant un siège pour véhicule permettant à un utilisateur assis sur le siège d'atteindre sans difficulté l'enrouleur de ceinture de sécurité correspondant quand le siège est en position nominale ou de confort.

A cet effet, la présente invention a pour objet un siège pour véhicule, comprenant un dossier, une assise et un rail de guidage pouvant être fixé au plancher du véhicule, le dossier étant mobile par rapport à l'assise entre une position d'utilisation et une position escamotée, et le dossier et l'assise étant ensemble mobiles en translation le long du rail de guidage, caractérisé en ce que le siège comprend
un mécanisme de limitation de coulissement de l'assise le long du rail de guidage à une zone de coulissement prédéterminée, comprenant deux surfaces de butée délimitant entre elles la zone de coulissement prédéterminée, et un organe de butée mobile entre une position d'engagement dans laquelle l'organe de butée est destiné à venir en appui contre l'une ou l'autre des deux surfaces de butée pour empêcher un coulissement de l'assise hors de ladite zone de coulissement prédéterminée, et une position de dégagement dans laquelle l'organe de butée est en décalage par rapport aux surfaces de butée de manière à permettre un coulissement de l'assise à l'intérieur et hors de la zone de coulissement prédéterminée,
des premiers moyens de blocage configurés pour empêcher un déplacement de l'organe de butée en position de dégagement quand le dossier est en position d'utilisation et autoriser le déplacement de l'organe de butée en position de dégagement quand le dossier est en position escamotée,
des deuxièmes moyens de blocage configurés pour empêcher un retour du dossier en position d'utilisation quand l'organe de butée est en position de dégagement et autoriser un retour du dossier en position d'utilisation quand l'organe de butée est en position d'engagement, et
des troisièmes moyens de blocage configurés pour bloquer l'organe de butée en position de dégagement quand l'assise est hors de la zone de coulissement prédéterminée et permettre le retour de l'organe de butée en position d'engagement quand l'assise est dans la zone de coulissement prédéterminée.

Ainsi, le siège selon l'invention limite le coulissement du siège à la zone de coulissement prédéterminée tant que le siège est en position d'utilisation, c'est-à-dire en position nominale ou de confort.

La zone de coulissement prédéterminée peut bien entendu être choisie telle que l'enrouleur de sécurité soit accessible tant que le siège est dans cette zone de coulissement prédéterminée.

Il est possible pour l'utilisateur de régler la position longitudinale du siège le long du rail, dans les limites de la zone de coulissement prédéterminée.

Pour permettre au siège de coulisser hors de la zone de coulissement prédéterminée, il est nécessaire de déplacer le dossier en position escamotée.

En outre, tant que le siège est hors de la zone de coulissement prédéterminée, il est impossible au siège selon l'invention de recouvrer sa position d'utilisation. Cela garantit une utilisation du siège en position d'utilisation uniquement dans la zone de coulissement prédéterminée.

Selon un mode de réalisation préféré, le siège comprend des quatrièmes moyens de blocage, les quatrièmes moyens de blocage étant configurés pour empêcher un déplacement de l'organe de butée en position de dégagement quand le dossier est dans une position intermédiaire comprise entre la position d'utilisation et la position escamotée.

Cette caractéristique a l'avantage d'offrir une sécurité supplémentaire, en empêchant un utilisateur d'extraire l'ensemble formé de l'assise et du dossier ou de le faire coulisser hors de la zone de coulissement prédéterminée alors que le dossier a quitté la position d'utilisation ou de confort mais n'a pas atteint la position escamotée.

Cette caractéristique supprime la dégradation de composants du siège en cas de retour inattendu du dossier en position d'utilisation, alors que le mécanisme de déplacement de l'organe de butée a commencé d'être actionné.

Selon un mode de réalisation préféré, le siège comprend des premiers moyens de verrouillage ayant un premier verrou mobile entre une position de verrouillage dans laquelle le premier verrou empêche de désolidariser l'assise du rail de guidage tout en permettant à l'assise de coulisser le long du rail de guidage, et une position de déverrouillage dans laquelle le premier verrou autorise une désolidarisation de l'assise et du rail de guidage, et un actionneur commun au premier verrou et à l'organe de butée, l'actionneur étant mobile successivement entre une position de repos dans laquelle l'actionneur déplace le premier verrou en position de verrouillage et permet à l'organe de butée d'être en position d'engagement, une position de coulissement dans laquelle l'actionneur laisse le premier verrou en position de verrouillage et déplace l'organe de butée en position de dégagement, et une position d'extraction dans laquelle l'actionneur maintient l'organe de butée en position de dégagement et déplace le premier verrou en position de déverrouillage.

Ainsi, le siège est extractible, et cette extraction n'est possible que lorsque le dossier est en position escamotée.

En effet, le fait de disposer d'un actionneur commun pour déplacer le premier verrou et l'organe de butée a pour effet que la position du premier verrou est assujettie à celle de l'organe de butée : le premier verrou déverrouille l'assise et le rail que si l'organe de butée est préalablement en position de dégagement, ce qui, compte-tenu des premiers moyens de blocage, n'est possible qu'à la condition que le siège soit en position escamotée.

Selon un mode de réalisation préféré, le siège comprend des deuxièmes moyens de verrouillage ayant un deuxième verrou mobile entre une position de verrouillage dans laquelle le deuxième verrou immobilise l'assise le long du rail de guidage et une position de déverrouillage dans laquelle le deuxième verrou autorise un coulissement de l'assise le long du rail de guidage, l'actionneur étant commun au premier verrou, au deuxième verrou et à l'organe de butée, et l'actionneur étant successivement mobile la position de repos dans laquelle l'actionneur déplace les premier et deuxième verrous en position de verrouillage et permet à l'organe de butée d'être en position d'engagement, une position de réglage longitudinal dans laquelle l'actionneur déplace le deuxième verrou en position de déverrouillage et laisse l'organe de butée en position d'engagement et le premier verrou en position de verrouillage, la position de coulissement dans laquelle l'actionneur déplace l'organe de butée en position de dégagement et maintient le deuxième verrou en position de déverrouillage et le premier verrou en position de verrouillage, et la position d'extraction dans laquelle l'actionneur déplace le premier verrou en position de déverrouillage et maintient le deuxième verrou en position de déverrouillage et l'organe de butée en position de dégagement.

Ces caractéristiques permettent un réglage longitudinal de la position de l'ensemble formé de l'assise et du dossier le long du rail de guidage, dans les limites imposées par la zone de coulissement.

Le fait de disposer d'un actionneur commun limite l'encombrement du siège et améliore l'ergonomie dans la mesure où un utilisateur souhaitant déplacer l'organe de butée en position de dégagement, par exemple pour déplacer le siège hors de la zone de coulissement prédéterminée, ou souhaitant extraire le siège, n'a qu'une seule commande à actionner.

Selon un mode de réalisation préféré, les deuxièmes moyens de blocage comprennent un organe de sécurité, mobile entre une position de blocage dans laquelle l'organe de sécurité bloque le dossier en position escamotée, et une position de déblocage dans laquelle l'organe de sécurité permet un retour du dossier en position d'utilisation, et des moyens de synchronisation adaptés pour synchroniser un déplacement de l'organe de butée et de l'organe de sécurité, de sorte que l'organe de sécurité soit en position de déblocage quand l'organe de butée est position d'engagement et que l'organe de sécurité soit en position de blocage quand l'organe de butée est en position de dégagement, et dans lequel les premiers moyens de blocage comprennent une came solidaire du dossier, la came étant conformée pour former obstacle au déplacement de l'organe de sécurité de la position de déblocage à la position de blocage quand le dossier est en position d'utilisation et pour s'effacer de la trajectoire de l'organe de sécurité entre la position de déblocage et la position de blocage quand le dossier est en position escamotée.

Cette configuration a l'avantage d'être économique.

Selon un mode de réalisation préféré, les moyens de synchronisation comprennent un organe de transmission mobile en rotation entre une première position et une deuxième position, et des moyens de liaison reliant l'organe de transmission à l'organe de butée et à l'organe de sécurité de sorte qu'un déplacement de l'organe de transmission de la première position à la deuxième position provoque un déplacement de l'organe de butée de la position d'engagement à la position de dégagement et de l'organe de sécurité de la position de déblocage à la position de blocage, et dans lequel le siège comprend des moyens d'entraînement destinés à entraîner l'organe de transmission de la première position à la deuxième position, en vue de déplacer l'organe de butée de la position d'engagement à la position de dégagement.

Ces caractéristiques assurent une commande simultanée fiable et sans effort de l'organe de butée et de l'organe de sécurité.

Selon un mode de réalisation préféré, les moyens d'entraînement comprennent un actionneur ayant une portion à crémaillère, un levier rotatif destiné à prendre appui sur l'organe de transmission pour déplacer l'organe de transmission de la première position à la deuxième position, le levier rotatif ayant une portion d'engrenage engrenant, directement ou indirectement, avec la portion à crémaillère.

Ces caractéristiques permettent de transformer le mouvement rectiligne de l'actionneur en une rotation prédéterminée du levier. Cela permet de choisir le moment auquel le levier appuie contre l'organe de transmission, par exemple après déverrouillage du deuxième verrou mais avant déverrouillage du premier verrou, et de limiter les efforts nécessaires à l'utilisateur pour commander l'organe de butée.

Selon un mode de réalisation préféré, le mécanisme de limitation de coulissement comprend plusieurs paires de surfaces de butée, chaque paire de surfaces de butée délimitant une zone distincte de coulissement prédéterminée de l'assise le long du rail de guidage.

Ainsi, le siège peut servir en tant que siège de rang N et de rang N+1, avec à chaque fois l'assurance que l'emplacement du siège en position d'utilisation le long du rail permette à un passager d'atteindre sans difficulté un enrouleur de ceinture de sécurité adjacent.

Selon un autre aspect, l'invention a également pour objet un véhicule, notamment un véhicule automobile, comprenant un siège ayant les caractéristiques précitées.

Ce véhicule offre une plus grande ergonomie d'utilisation à ses utilisateurs.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en perspective d'un siège selon un mode de réalisation de l'invention, dossier en position nominale,
- La figure 2 est une vue de côté d'un siège selon un mode de réalisation de l'invention, dossier en position nominale,
- Les figures 3 et 4 sont des vues en perspective d'un siège selon un mode de réalisation de l'invention, dossier en position nominale,
- La figure 5 est une vue de côté d'un siège selon un mode de réalisation de l'invention, dont une commande d'inclinaison du dossier est en position active,
- La figure 6 est une vue en perspective d'un siège selon un mode de réalisation de l'invention, dossier en position escamotée,
- La figure 7 est une vue de côté d'un siège selon un mode de réalisation de l'invention, dossier en position escamotée,
- La figure 8 est une vue en perspective d'un siège selon un mode de réalisation de l'invention, dossier en position escamotée, et organe de butée en position de dégagement,
- La figure 9 est une vue de côté d'un siège selon un mode de réalisation de l'invention, dossier en position escamotée, et pièce de sécurité en position de blocage,
- La figure 10 est une vue en perspective d'un siège selon un mode de réalisation de l'invention, dossier en position escamotée, hors zone de coulissement prédéterminée,
- La figure 11 est une vue en perspective d'une partie d'un siège selon un mode de réalisation de l'invention,
- La figure 12 est une vue en perspective d'une partie d'un siège selon un mode de réalisation de l'invention,
- La figure 13 est une vue de côté d'un siège selon un mode de réalisation de l'invention, dont le dossier est dans une position intermédiaire comprise entre la position nominale et la position escamotée,
- La figure 14 est une vue en perspective d'un détail de la figure 13,
- Les figures 15 et 16 sont des vues de côté d'un siège selon un mode de réalisation de l'invention, dossier en position escamotée.

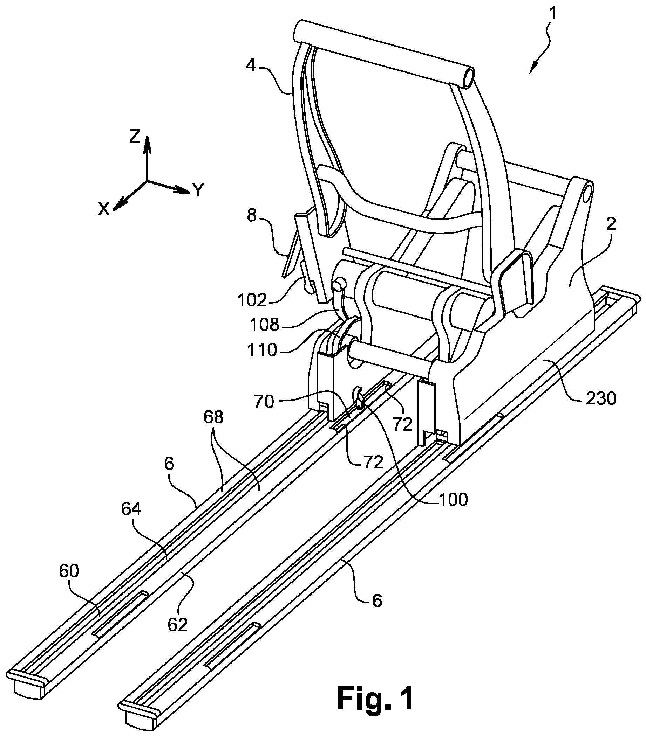

La figure 1 montre un siège 1 selon un mode de réalisation de l'invention. Le siège 1 est destiné à équiper un véhicule, par exemple un véhicule automobile.

On notera que par siège on entend siège destiné à recevoir un ou plusieurs passagers. Dans le cas où le siège 1 est destiné à recevoir plusieurs passagers, le siège 1 peut aussi être appelé banquette.

On précise aussi que la description est réalisée par rapport à un référentiel cartésien lié au siège 1, l'axe X étant orienté dans la direction longitudinale du siège 1, l'axe Y étant orienté dans la direction transversale du siège 1, et l'axe Z étant orienté dans la direction verticale du siège 1. Ainsi, les orientations, directions et déplacements longitudinaux, transversaux, verticaux, avant ou arrière, haut ou bas, sont définis par rapport à ce référentiel.

Le siège 1 comprend un ensemble formé d'une assise 2 et d'un dossier 4, et un rail 6 de guidage, en l'occurrence deux rails 6 de guidage, pouvant être fixé au plancher d'un véhicule.

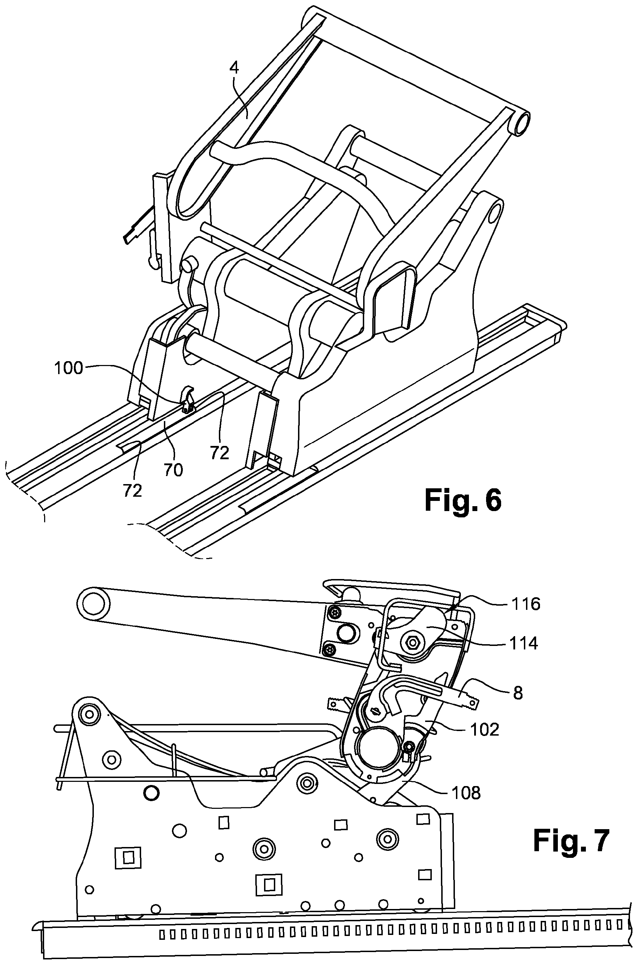

Le dossier 4 est mobile par rapport à l'assise 2, entre une position d'utilisation, visible notamment sur les figures 1 à 5, dans laquelle le dossier 4 est destiné à soutenir un passager assis sur l'assise 2, et une position escamotée, visible par exemple sur les figures 6 à 10, dans laquelle le dossier 4 est rabattu en direction de l'assise 2, dans un plan sensiblement horizontal, pour dégager un espace de chargement ou pour que l'arrière du dossier 4 forme support à un objet.

Dans la présente demande, la position d'utilisation inclut une position nominale, dans laquelle assise et dossier sont sensiblement orthogonaux, et/ou le cas échéant une position dite de confort, dans laquelle le dossier 4 est incliné davantage vers l'arrière par rapport à la position nominale, dans un sens opposé à celui conduisant à la position escamotée, en vue d'améliorer le confort de l'utilisateur.

Le dossier 4 est par exemple mobile en rotation par rapport à l'assise 2, relié à celle-ci au moyen d'une liaison pivot P1 d'axe transversal.

Le siège 1 peut comprendre des moyens de verrouillage du dossier 4 dans la position d'utilisation ou escamotée, et une commande 8 d'inclinaison de dossier permettant de déverrouiller le dossier 4 en vue de le basculer en position d'utilisation ou escamotée.

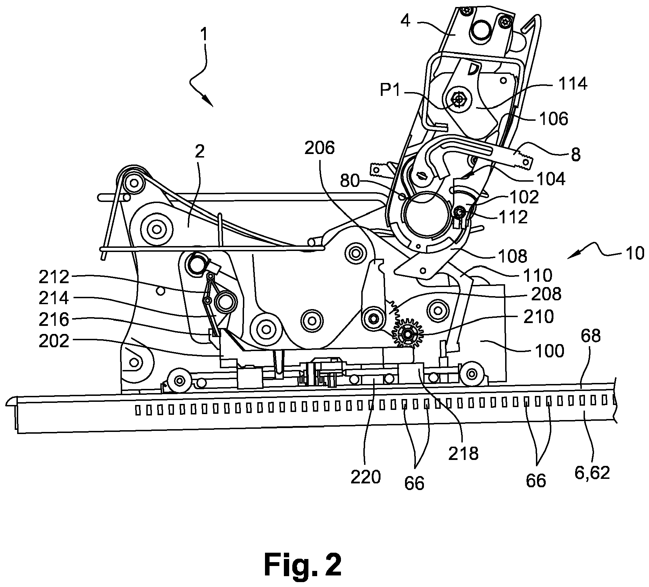

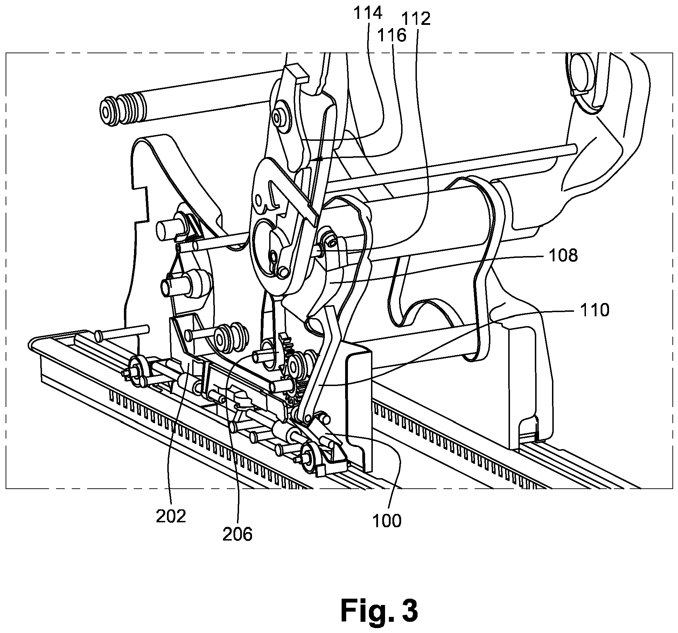

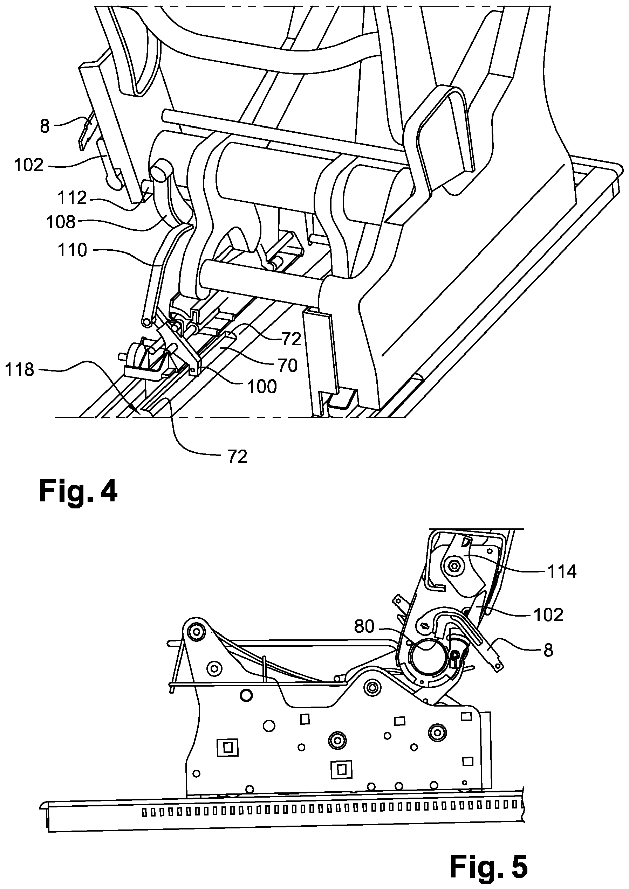

La commande 8 d'inclinaison est ici un levier mobile, par exemple en rotation par rapport au dossier 4 autour d'un axe transversal, entre une position inactive, visible notamment sur les figures 2 et 3, dans laquelle la commande 8 permet un verrouillage du dossier 4 par les moyens de verrouillage, et une position active, visible par exemple sur la figure 5, dans laquelle la commande 8 déverrouille le dossier 4 pour permettre son déplacement par rapport à l'assise 2. La commande 8 d'inclinaison de dossier 4 peut être rappelée en position inactive par des moyens de rappel, comme un ressort (non représenté).

La commande 8 d'inclinaison comprend avantageusement une surface fonctionnelle d'appui 80.

L'assise 2 est quant à elle montée mobile en translation le long des rails 6 de guidage, si bien que l'ensemble formé de l'assise 2 et du dossier 4 peut coulisser le long des rails 6 de guidage afin de permettre un réglage longitudinal de la position du siège 1.

Les rails 6 de guidage sont sensiblement parallèles. Les rails 6 comprennent ici un corps en U ayant une paroi 60 de fond et deux ailes 62 latérales délimitant une rainure 64 centrale. Les ailes 62 latérales peuvent comprendre des encoches 66, destinées à coopérer avec un verrou pour immobiliser le siège 1 selon la direction longitudinale X. Les ailes 62 latérales peuvent par ailleurs présenter un retour 68 intérieur et/ou extérieur, s'étendant notamment à partir de l'extrémité des ailes 62 latérales, de façon sensiblement perpendiculaire à celles-ci.

L'un au moins des rails 6 peut comprendre un logement ou rainure 70 longitudinale, par exemple ménagé sur l'un des retours 68. Ce logement 70 est délimité à ses extrémités par deux surfaces 72 de butée, s'étendant sensiblement transversalement par rapport aux rails 6. Le logement 70 délimite une zone de coulissement prédéterminée de l'assise 2 le long du rail 6, c'est-à-dire une zone limitée du rail 6 dans laquelle l'assise 2 est autorisée à coulisser alors que le dossier 4 est en position d'utilisation. L'emplacement de cette zone sur le rail 6 dépend préférentiellement de l'emplacement de l'enrouleur de ceinture de sécurité à l'intérieur du véhicule : un utilisateur assis sur le siège 1 doit pouvoir atteindre cet enrouleur de ceinture de sécurité quelque soit la position du siège 1 dans la zone de coulissement. En-dehors de cette zone de coulissement, l'enrouleur de ceinture de sécurité est inaccessible et donc, selon l'invention, l'utilisation du siège 1 en position d'utilisation en-dehors de cette zone est rendu impossible.

A cet effet, le siège 1 selon l'invention inclut un mécanisme 10 de limitation de coulissement de l'assise 2 le long du rail 6 de guidage, permettant de limiter le coulissement de l'assise 2 à la zone de coulissement prédéterminée quand le dossier 4 est en position d'utilisation.

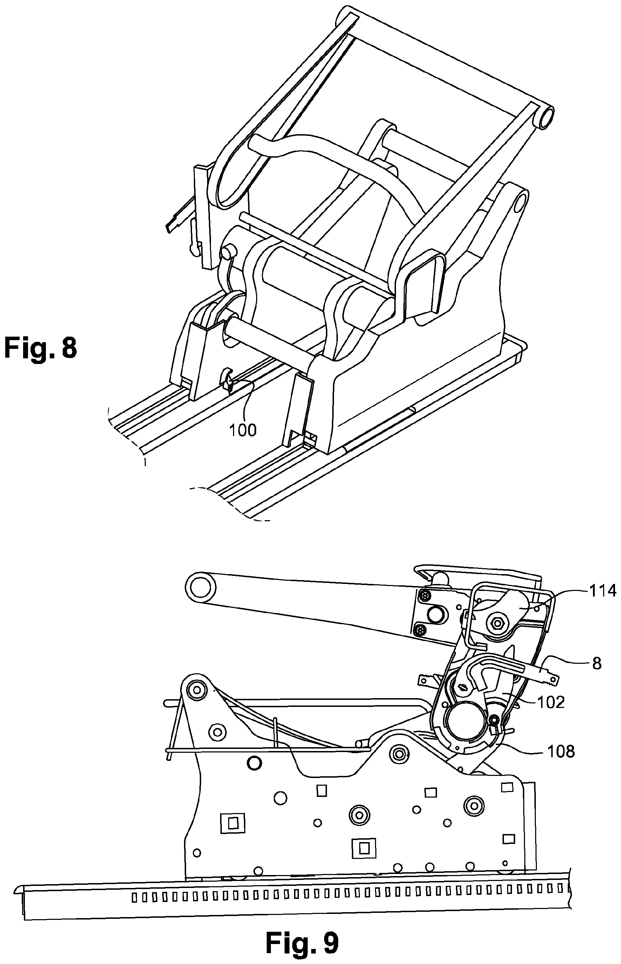

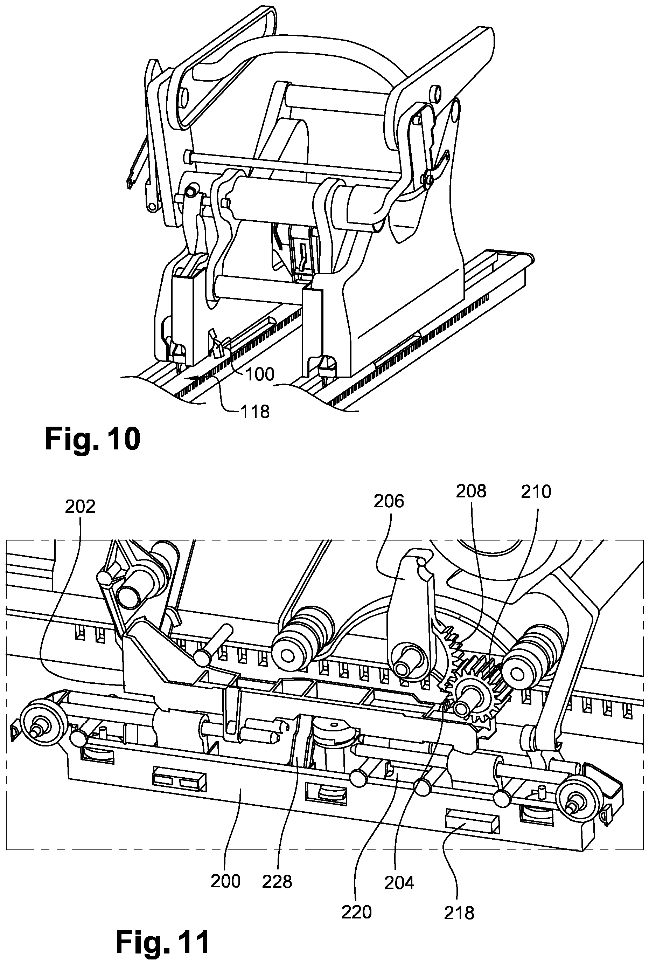

Ce mécanisme 10 de limitation de coulissement comprend les deux surfaces 72 de butée, délimitant entre elles la zone de coulissement prédéterminée, et un organe 100 de butée mobile entre une position d'engagement, visible par exemple sur les figures 1, 4 et 6, dans laquelle l'organe 100 de butée est entre les surfaces 72 de butée, dans le logement 70, de sorte que l'organe 100 de butée est destiné à venir en appui contre l'une ou l'autre des deux surfaces 72 de butée quand l'assise 2 est translatée le long du rail 6 (voir figure 6), ce qui empêche ainsi un coulissement de l'assise 2 hors de la zone de coulissement prédéterminée, et une position de dégagement, illustrée sur les figures 8 et 10, dans laquelle l'organe 100 de butée est hors du logement 70, décalé transversalement par rapport aux surfaces 72 de butée, si bien que l'organe 100 de butée ne peut pas venir en appui contre les surfaces 72 de butée et, de ce fait, permet un coulissement de l'assise 2 hors de la zone de coulissement prédéterminée.

Comme les surfaces 72 de butée sont ici ménagées sur le rail 6, l'organe 100 de butée appartient ici à l'ensemble mobile par rapport au rail 6, c'est-à-dire l'ensemble incluant l'assise 2 et le dossier 4.

L'organe 100 de butée est montée mobile en rotation autour d'un axe longitudinal, par rapport à l'assise 2, et plus particulièrement par rapport à un chariot 200 de guidage, inséré dans la rainure 64 centrale du rail 6, et muni de galets permettant de guider l'assise 2 en translation le long du rail 6.

De préférence, le siège 1 comprend des moyens de rappel, comme un ressort, pour rappeler l'organe 100 de butée dans la position d'engagement.

Le siège 1 comprend aussi des premiers moyens de blocage, configurés pour maintenir l'organe 100 de butée en position d'engagement tant quand le dossier 4 est en position d'utilisation, des deuxièmes moyens de blocage, configurés pour empêcher le dossier 4 de passer de la position escamotée à la position d'utilisation tant que l'organe 100 de butée est en position de dégagement, et des troisièmes moyens de blocage, configurés pour empêcher l'organe 100 de butée de retourner en position d'engagement tant que l'assise 2 est hors de la zone de coulissement prédéterminée.

Un utilisateur souhaitant faire coulisser le siège 1 hors de la zone de coulissement prédéterminée doit donc nécessairement basculer le dossier 4 en position escamotée. Hors de la zone de coulissement prédéterminée, il est impossible de basculer de nouveau le dossier 4 en position d'utilisation. L'utilisation du siège 1 en position d'utilisation est ainsi autorisée uniquement dans la zone de coulissement prédéterminée.

Comme illustré sur la figure 2, les deuxièmes moyens de blocage peuvent comprendre un organe 102 de sécurité, mobile par exemple en rotation autour d'un axe transversal par rapport au dossier 4, entre une position de blocage, visible sur la figure 9, dans laquelle l'organe 102 de sécurité empêche le retour du dossier 4 en position d'utilisation, et une position de déblocage, visible sur la figure 2, dans laquelle l'organe 102 de sécurité permet un retour du dossier 4 en position d'utilisation.

Plus précisément, l'organe 102 de sécurité peut comporter une surface 104 de blocage située, en position de blocage, sur la trajectoire de la surface fonctionnelle d'appui 80 de la commande 8 d'inclinaison de dossier et, en position de déblocage, hors de la trajectoire de celle-ci (voir figure 5).

L'organe 102 de sécurité comprend aussi avantageusement une surface d'appui 106.

Des moyens de synchronisation relient l'organe 102 de sécurité et l'organe 100 de butée de sorte qu'un déplacement de l'organe 100 de butée de la position d'engagement à la position de dégagement provoque un déplacement de l'organe 102 de sécurité de la position de déblocage à la position de blocage, et inversement.

Les moyens de synchronisation comprennent ici un organe 108 de transmission, par exemple mobile en rotation autour d'un axe transversal par rapport à l'assise 2, entre une première position, visible sur la figure 2, et une deuxième position, visible sur la figure 9, et des moyens de liaison reliant l'organe 108 de transmission à l'organe 100 de butée et à l'organe 102 de sécurité de sorte qu'un déplacement de l'organe 108 de transmission de la première position à la deuxième position provoque un déplacement de l'organe 100 de butée de la position d'engagement à la position de dégagement et de l'organe 102 de sécurité de la position de déblocage à la position de blocage.

Les moyens de liaison peuvent comprendre une biellette 110 reliée à l'organe 108 de transmission d'une part et à l'organe 100 de butée d'autre part, la biellette 110 étant adaptée pour transformer une rotation de l'organe 108 de transmission autour de l'axe transversal en une rotation de l'organe 100 de butée autour de l'axe longitudinal, et inversement.

Les moyens de liaison peuvent par ailleurs comprendre un axe 112 de synchronisation, mobile en rotation par rapport à l'assise 2 autour d'un axe transversal, et sur lequel l'organe 108 de transmission et l'organe 102 de sécurité sont tous deux montés solidaires.

Les premiers moyens de blocage comprennent une came 114 solidaire du dossier 2. La came 114 comprend une portion 116 de butée configurée pour former obstacle au déplacement de l'organe 102 de sécurité de la position de déblocage à la position de blocage quand le dossier 4 est en position d'utilisation, la surface d'appui 106 venant alors en appui contre la portion 116 de butée, et pour s'effacer de la trajectoire décrite par l'organe 102 de sécurité entre la position de déblocage et la position de blocage quand le dossier 4 est en position escamotée.

Ainsi, la came 114 bloque l'organe 102 de sécurité en position de déblocage, et ce faisant l'organe 100 de butée en position d'engagement, tant que le dossier 4 est en position d'utilisation.

Pour permettre ce blocage aussi bien en position nominale qu'en position de confort, et un déblocage en position escamotée, la came 114 présente avantageusement une forme coudée, côté concave vers l'arrière.

Les troisièmes moyens de blocage comprennent une surface 118 d'appui du rail 6 de guidage, par exemple ménagée sur le retour 68 dans lequel est réalisé le logement 70 (figure 10).

Quand l'organe 100 de butée est en position de dégagement, et l'assise 2 hors de la zone de coulissement prédéterminée, la surface 118 d'appui, notamment l'un des retours 68, forme obstacle au retour de l'organe 100 de butée en position d'engagement.

Cela maintient donc également l'organe 102 de sécurité en position de blocage, si bien que le dossier 4 est maintenu dans la position escamotée. L'usage du siège 1 avec un dossier 4 en position d'utilisation est ainsi impossible hors de la zone de coulissement prédéterminée.

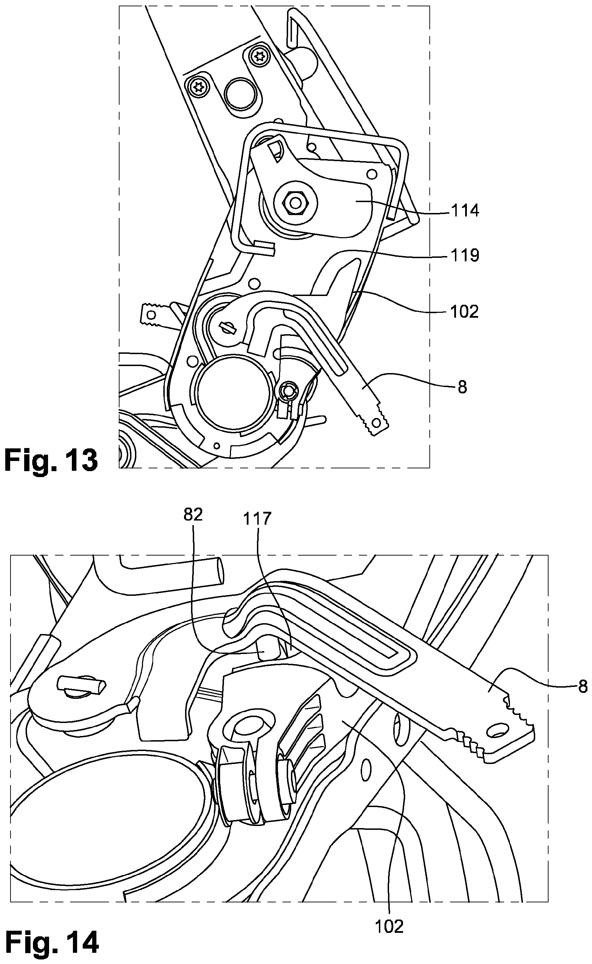

Lorsque le dossier 4 a quitté la position d'utilisation, la came 114 a quitté sa position de butée, c'est-à-dire la position dans laquelle la came 114 faisait obstacle au déplacement de l'organe 102 de sécurité en position de déblocage (figure 13). Dans ce cas, et si le dossier 4 est maintenu par inadvertance hors de la position d'utilisation, mais sans toutefois être basculé jusqu'à la position escamotée, rien ne s'oppose au déplacement de l'organe 102 de sécurité vers la position de déblocage. Rien ne s'oppose donc aussi au déplacement de l'organe 100 de butée en position de dégagement pour coulisser le siège 1 hors de la zone de coulissement prédéterminée ou pour extraire l'ensemble formé de l'assise 2 et du dossier 4. Si, dans cette situation, l'organe 102 de sécurité a commencé à être déplacé en position de déblocage et que le dossier 4 revient en position d'utilisation, alors il existe un risque que la came 114 appuie contre le dos de l'organe 102 de sécurité, c'est-à-dire contre la surface qui est du côté de la came 114 opposé à celui où se situe la surface 116 d'appui. Le retour du dossier 4 en position d'utilisation pourrait dans ce cas aboutir à une casse de l'organe 104 de sécurité.

Pour supprimer ce risque, le siège 1 peut avantageusement comprendre des quatrièmes moyens de blocage qui sont configurés pour empêcher un déplacement de l'organe 102 de sécurité en position de déblocage, et donc de l'organe 100 de butée en position de dégagement, quand la came 114 est dans une position effacée dans laquelle la came 114 n'empêche plus le déplacement de l'organe 102 de sécurité en position de déblocage. Cela arrive quand le dossier 4 est dans une position intermédiaire comprise entre la position d'utilisation d'une part et la position escamotée d'autre part, c'est-à-dire quand le dossier 4 a commencé à être basculé vers l'avant mais n'est pas encore parvenu en position escamotée.

Les quatrièmes moyens de blocage comprennent par exemple un organe 82 de blocage, visible sur la figure 14, dont le déplacement est subordonné à la position du dossier 4 : l'organe 82 de blocage adopte une position de blocage (figures 13 et 14) quand le dossier 4 est entre les positions d'utilisation et escamotée, ou une position de déblocage quand le dossier 4 est dans la position d'utilisation ou escamotée.

Selon l'exemple de réalisation illustré sur les figures 13 à 16, l'organe 82 de blocage peut être un axe transversal s'étendant à partir de la commande 8 d'inclinaison du dossier 4.

Le siège 1 peut par ailleurs comporter un système (non représenté), connu de l'homme du métier, de rappel de la commande 8 d'inclinaison en position inactive dès que le dossier 4 est verrouillé dans la position d'utilisation ou escamotée, et de maintien de l'organe 8 de commande en position active tant que le dossier 4 n'est pas verrouillé dans la position d'utilisation ou escamotée, donc tant que le dossier 4 est dans une position intermédiaire entre les positions d'utilisation et escamotée.

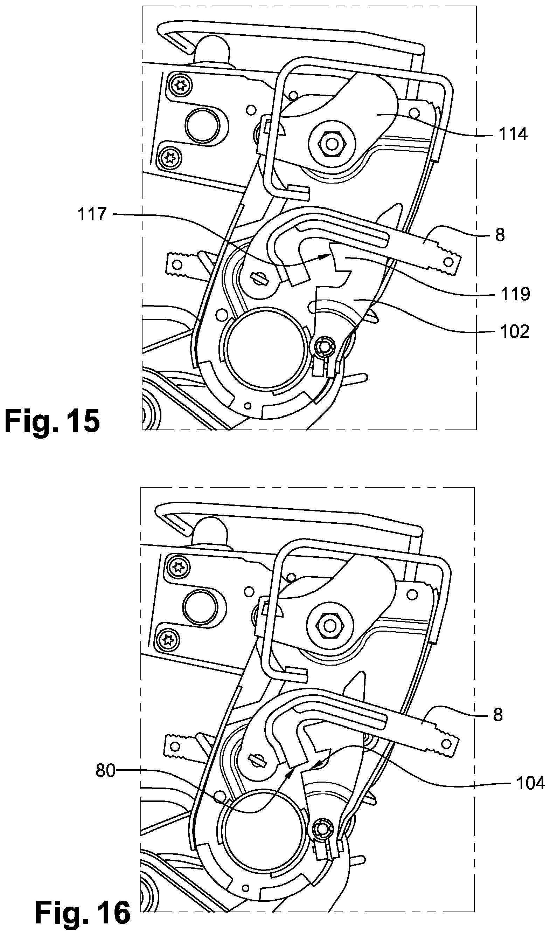

Ainsi, l'organe 82 de blocage est en position de blocage quand la commande 8 d'inclinaison est en position active (figures 13 et 14), donc tant que le dossier 4 est dans une position intermédiaire, et en position de déblocage (figures 15 et 16) quand la commande 8 d'inclinaison est en position inactive, donc quand le dossier 4 est en position d'utilisation ou escamotée.

Les quatrièmes moyens de blocage peuvent en outre comprendre une deuxième surface 117 d'appui, visible sur les figures 14 et 15, ménagée sur l'organe 102 de sécurité, et plus précisément sur une excroissance 119 de l'organe 102 de sécurité, cette deuxième surface 117 d'appui étant destinée à buter contre l'organe 82 de blocage quand celui-ci est en position de blocage de sorte que cet organe 82 de blocage empêche le déplacement de l'organe 102 de sécurité en position de déblocage.

Ainsi, quand le dossier 4 est dans une position intermédiaire comprise entre la position d'utilisation et escamotée, la commande 8 d'inclinaison reste maintenue dans une position active, basse, visible sur les figures 13 et 14, et l'organe 82 de blocage est alors en position de blocage, s'étendant en regard de la deuxième surface 117 d'appui, sur la trajectoire de l'organe 102 de sécurité. Par conséquent, même si la came 114 est effacée et ne s'oppose plus au déplacement de l'organe 102 de sécurité, celui-ci ne peut toujours pas être déplacé en position de déblocage.

Une fois que le dossier 4 est tout à fait basculé en position escamotée, la commande 8 d'inclinaison revient automatiquement en position inactive, si bien que l'organe 82 de sécurité est en position de déblocage, décalé par rapport à la deuxième surface 117 d'appui et hors de la trajectoire de l'organe 102 de sécurité (figure 15). L'organe 102 de sécurité peut alors être librement déplacé jusqu'en position de déblocage (figure 16).

Le siège 1 comprend des moyens d'entraînement destinés à entraîner l'organe 108 de transmission de la première position à la deuxième position, en vue de déplacer l'organe 100 de butée de la position d'engagement à la position de dégagement.

Comme cela apparaît notamment sur la figure 2, les moyens d'entraînement comprennent un actionneur 202 et un levier 206 destiné à prendre appui contre l'organe 108 de transmission pour déplacer celui-ci de la première position à la deuxième position.

Le levier 206 est par exemple mobile en rotation par rapport à l'assise 2, autour d'un axe transversal, entre une position inactive, visible sur la figure 2, dans laquelle le levier 206 est à distance de l'organe 108 de transmission et une position d'actionnement (non représentée) dans laquelle le levier 206 est en appui contre l'organe 108 de transmission pour pousser celui-ci jusqu'à la deuxième position.

L'actionneur 202 est par exemple mobile en translation longitudinale par rapport à l'assise 2, dans le cas présent entre plusieurs positions successives décrites plus en détails ci-après : une position de repos, une position de réglage longitudinal, une position de coulissement, et une position d'extraction.

L'actionneur 202 présente une portion 204 à crémaillère, et le levier 206 rotatif présente une portion 208 d'engrenage engrenant, directement ou indirectement, c'est-à-dire par exemple par l'intermédiaire d'une roue dentée 210, avec la portion 208 à crémaillère.

Ainsi, le mouvement de translation de l'actionneur 202 est transformé en un mouvement contrôlé de rotation du levier 206, c'est-à-dire qu'à une certaine translation de l'actionneur 202 correspond une rotation prédéterminée du levier 206.

Autrement dit, la portion 204 à crémaillère, la portion 208 d'engrenage, et le cas échéant la roue dentée 210 sont configurés pour que le levier 206 appuie contre l'organe 108 de transmission uniquement pour une course prédéterminée de l'actionneur 202, plus précisément quand l'actionneur 202 est déplacé en position de coulissement.

Pour qu'un utilisateur puisse déplacer l'actionneur 202, il peut être prévu une commande, comme une sangle de traction ou une barre s'étendant sous l'assise 2, cette commande permettant de déplacer l'actionneur 202 soit directement, soit par l'intermédiaire d'un levier 212, visible sur la figure 2, monté rotatif par rapport à l'assise 2 autour d'un axe transversal, le levier 212 ayant une portion 214 d'entraînement logée dans un cran 216 de l'actionneur 202, de sorte qu'une rotation du levier 212 provoque une translation de l'actionneur 202.

Comme illustré sur la figure 11, le siège 1 comprend des premiers moyens de verrouillage ayant un premier verrou 218, par exemple en forme de crochet, mobile par rapport à l'assise 2, plus particulièrement par rapport au chariot 200 de guidage, en rotation autour d'un axe longitudinal, entre une position de verrouillage dans laquelle le premier verrou 218 empêche de désolidariser l'assise 2 du rail 6 de guidage, en prenant par exemple appui sous le retour 68, tout en permettant à l'assise 2 de coulisser le long du rail 6 de guidage, et une position de déverrouillage dans laquelle le premier verrou 218 autorise une désolidarisation de l'assise 2 et du rail 6 de guidage.

Ainsi, le premier verrou 218 permet de réaliser un verrouillage selon la direction verticale de l'assise 2 par rapport au rail 6 de guidage.

Toujours selon le mode de réalisation illustré sur la figure 11, le siège 1 comprend des deuxièmes moyens de verrouillage ayant un deuxième verrou 220, pouvant présenter un ou plusieurs crochets ou dents pouvant s'engager dans les encoches 66, mobile par rapport à l'assise 2, plus particulièrement par rapport au chariot 200 de guidage, en rotation autour d'un axe longitudinal, entre une position de verrouillage dans laquelle le deuxième verrou 224 immobilise l'assise 2 le long du rail 6 de guidage et une position de déverrouillage dans laquelle le deuxième verrou 220 autorise un coulissement de l'assise 2 le long du rail 6 de guidage.

Ainsi, le deuxième verrou 220 permet un verrouillage en position longitudinale de l'ensemble incluant l'assise 2 et le dossier 4.

Le premier verrou 218 et le deuxième verrou 220 sont déplacés de leur position de blocage à leur position de déblocage, et inversement, par l'actionneur 202.

Quand l'actionneur 202 est déplacé en position de repos, cela déplace le premier verrou 218 et le deuxième verrou en position de verrouillage. Par conséquent, l'assise 2 est immobilisée sur le rail 6 de guidage. L'organe 100 de butée est quant à lui maintenu en position d'engagement par les moyens de rappel.

Quand l'actionneur 202 est déplacé en position de réglage longitudinal, cela déplace le deuxième verrou 220 en position de déverrouillage. Le premier verrou 218 est quant à lui en position de verrouillage et l'organe 100 de butée en position d'engagement.

Autrement dit, l'assise 2 peut être translatée le long du rail 6 de guidage, dans les limites de la zone de coulissement prédéterminée.

Quand l'actionneur 202 est déplacé en position de coulissement, cela provoque l'appui du levier 206 contre l'organe 108 de transmission et conséquemment le déplacement de l'organe 100 de butée jusqu'à la position de dégagement. On rappelle que cela n'est possible que si le dossier 4 a été préalablement rabattu en position escamotée. Le premier verrou 218 est en position de verrouillage et le deuxième verrou 220 en position de déverrouillage.

Ainsi, le l'assise 2 peut être translatée sur toute la longueur du rail 6, c'est-à-dire dans et en-dehors de la zone de coulissement prédéterminée, dossier en position escamotée.

Quand l'actionneur 202 est déplacé en position d'extraction, cela provoque le déverrouillage du premier verrou 218.

L'assise 2 peut alors être séparée du rail 6 de guidage, par exemple pour augmenter l'espace de chargement à l'intérieur du véhicule.

Des moyens de rappel, comme un ressort, peuvent être prévus pour rappeler l'actionneur 202 en position de repos.

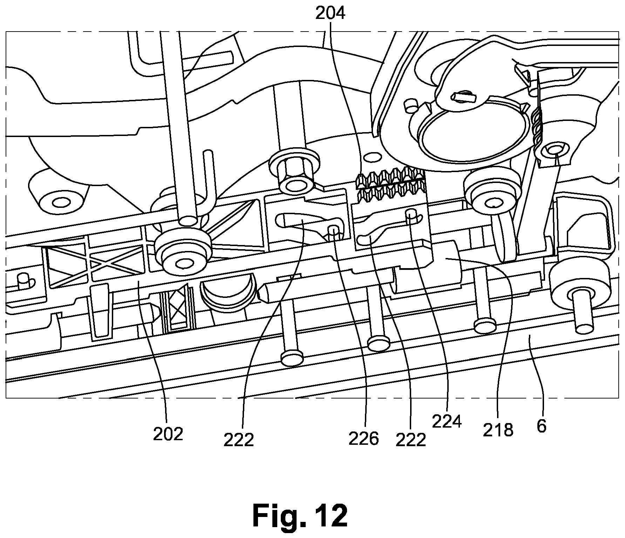

Pour provoquer un déplacement successif du deuxième verrou 220 puis du premier verrou 218, l'actionneur 202 peut comprendre des lumières 222 formant des rampes à l'intérieur de chacune desquelles s'étend un doigt 224, 226 solidaire des premier et deuxième verrous 218, 220, comme cela est visible sur la figure 12 dans laquelle l'actionneur 202 est en position de repos (le levier 206 et la roue dentée 210 ayant été masquée pour une meilleure visibilité), et comme cela est décrit dans le document de brevet EP1176047 au nom de la Demanderesse. La lumière 222 du premier verrou 218 peut comprendre un tronçon longitudinal tandis que la lumière 222 du deuxième verrou 220 comprend un tronçon incliné, le tronçon longitudinal ayant une longueur au moins égale à la course de l'actionneur pour passer de la position de repos à la position de réglage longitudinal.

Par ailleurs, l'assise 2, et plus précisément le chariot 200 de guidage, comprend avantageusement des moyens de calage, comme un levier 228 (figure 11) ou un doigt tels que décrits dans le document de brevet EP1176047, pour bloquer l'actionneur 202 en position d'extraction dès que l'actionneur 202 atteint cette position d'extraction, et un organe de déblocage, comme un palpeur tel que décrit dans le document de brevet EP1176047 permettant, quand l'assise 2 est remise en place sur le rail 6 après avoir été extraite, de débloquer l'actionneur 202 pour que ce dernier retourne automatiquement en position de repos sous l'action des moyens de rappel.

Aussi, comme décrit dans le document de brevet EP1176047, l'assise 2 peut comprendre deux flasques 230 reliant chacun un côté de l'assise 2 à l'un des deux rails 6. L'un des flasques 230, ou flasque de guidage, peut porter directement les premiers moyens de verrouillage, les deuxièmes moyens de verrouillage, le chariot de guidage 200, des moyens de positionnement à l'intérieur du rail 6 comme des plaquettes verticales et transversales, l'actionneur 202, son levier 212, les moyens de rappel de l'actionneur 202, les moyens de calage et l'organe de déblocage de l'actionneur 202, tandis que pour l'autre flasque, ou flasque de rattrapage, ces éléments peuvent être portés par un ou plusieurs chariots 200 de guidage montés mobiles transversalement par rapport au flasque, et rappelés dans une position sensiblement médiane par exemple par une lame ressort.

Le cas échéant, l'organe 100 de butée, l'organe 108 de transmission, le levier 206, sont agencés de préférence du côté du flasque de guidage.

Ainsi, l'assise 2 peut être extraite des rails 6, et remise aisément en place sur les rails 6 de guidage, à n'importe quel endroit des rails 6 de guidage.

Le fonctionnement du siège 1 selon le mode de réalisation des figures 1 à 12 est décrit ci-après.

Selon les figures 1 à 4, le siège 1 est en position d'utilisation et peut uniquement coulisser le long de la zone de coulissement prédéterminée. En effet, l'organe 100 de butée est en position d'engagement : le déplacement de l'assise 2 le long du rail 6 provoque l'appui de l'organe 100 de butée contre l'une ou l'autre des surfaces 72 de butée. L'utilisateur ne peut pas déplacer l'organe 100 de butée en position de dégagement, car le dossier 4 est en position d'utilisation, si bien que la came 114 bloque l'organe 102 de sécurité et, ce faisant, l'organe 100 de butée, dont les déplacements sont liés par les moyens de synchronisation. Le siège 1 ne peut pas être extrait, car le premier verrou 218 réalise un verrouillage vertical au moins tant que l'organe 100 de butée est en position d'engagement. L'utilisateur peut régler la position longitudinale du siège 1, dans la limite de la zone de coulissement prédéterminée, en déplaçant l'actionneur 202 dans la position de réglage longitudinal, ce qui provoque le déverrouillage du deuxième verrou 220. Dès que l'actionneur 202 cesse d'être sollicité, il est rappelé en position de repos par les moyens de rappel, ce qui provoque l'engagement du deuxième verrou 220 dans une ou plusieurs encoches 66, et conséquemment l'immobilisation du siège 1.

Pour déplacer l'assise 2 hors de la zone de coulissement prédéterminée ou pour extraire le siège 1, il est d'abord nécessaire de déplacer le dossier en position escamotée : l'utilisateur pivote la commande 8 (figure 5) pour déverrouiller l'articulation du dossier 4 sur l'assise 2, cette commande 8 n'étant pas bloquée par l'organe 102 de sécurité.

En basculant le dossier 4 en position escamotée, la came 114 s'efface figure 7) : cela déverrouille l'organe 102 de sécurité, l'organe 108 de transmission, et l'organe 100 de butée.

L'utilisateur peut donc déplacer l'actionneur 202 jusqu'à la position de coulissement : le deuxième verrou 220 est déplacé en position de déverrouillage, puis le levier 206 appuie contre l'organe 108 de transmission qui pivote, ce qui déplace l'organe 100 de butée en position de dégagement (figure 8) et déplace simultanément l'organe 102 de sécurité en position de blocage (figure 9). Tant que l'actionneur 202 n'est pas déplacé au-delà de la position de coulissement, le premier verrou 218 reste en position de verrouillage (le doigt 224 coulisse dans le tronçon longitudinal de la lumière 222) : il n'est pas possible d'extraire le siège 1.

Comme le deuxième verrou 220 est en position de déverrouillage et que l'organe 100 de butée est en position de dégagement, l'assise 2 peut être déplacée hors de la zone de coulissement prédéterminée (figure 10).

L'organe 100 de butée est au contact du retour 68 du rail 6, si bien que l'organe 100 de butée reste bloqué en position de dégagement tant que l'assise 2 est hors de la zone de coulissement prédéterminée. L'organe 102 de sécurité est donc également bloqué en position de blocage (figure 9) : la commande 8 ne peut pas être actionnée, il n'est pas possible de relever le dossier 4 en position d'utilisation.

Si l'utilisateur continue de tirer sur l'actionneur 202, celui-ci est déplacé jusqu'à la position d'extraction : le premier verrou 218 passe en position de déverrouillage, il est possible de séparer le rail 6 de guidage et l'ensemble comprenant l'assise 2 et le dossier 4.

Pour pouvoir à nouveau utiliser le siège 1 en position d'utilisation, il est nécessaire de translater l'assise 2 jusqu'à ce que l'organe 100 de butée soit en regard du ou de l'un des logements 70 déterminant la ou les zones de coulissement prédéterminées. Comme le retour 68 cesse de bloquer l'organe 100 de butée, celui-ci revient en position d'engagement sous l'effet des moyens de rappel. En parallèle, l'organe 102 de sécurité pivote jusqu'en position de déblocage (figure 7). La commande 8 peut de nouveau être actionnée (figure 5), ce qui déverrouille l'articulation du dossier 4 et permet de relever celui-ci jusqu'à la position d'utilisation (figure 2). La came 114 est de nouveau positionnée en face de l'organe 102 de sécurité, empêchant ainsi de déplacer l'organe 100 de butée en position de dégagement tant que le dossier 4 est en position d'utilisation.

## Revendications

1. Siège (1) pour véhicule, comprenant un dossier (4), une assise (2) et un rail (6) de guidage pouvant être fixé au plancher du véhicule, le dossier (4) étant mobile par rapport à l'assise (2) entre une position d'utilisation et une position escamotée, et le dossier (4) et l'assise (2) étant ensemble mobiles en translation le long du rail (6) de guidage, **caractérisé en ce que** le siège (1) comprend
un mécanisme (10) de limitation de coulissement de l'assise (2) le long du rail (6) de guidage à une zone de coulissement prédéterminée, comprenant deux surfaces (72) de butée délimitant entre elles la zone de coulissement prédéterminée, et un organe (100) de butée mobile entre une position d'engagement dans laquelle l'organe (100) de butée est destiné à venir en appui contre l'une ou l'autre des deux surfaces (72) de butée pour empêcher un coulissement de l'assise (2) hors de ladite zone de coulissement prédéterminée, et une position de dégagement dans laquelle l'organe (100) de butée est en décalage par rapport aux surfaces (72) de butée de manière à permettre un coulissement de l'assise (2) à l'intérieur et hors de la zone de coulissement prédéterminée,
des premiers moyens de blocage configurés pour empêcher un déplacement de l'organe (100) de butée en position de dégagement quand le dossier (4) est en position d'utilisation et autoriser le déplacement de l'organe (100) de butée en position de dégagement quand le dossier (4) est en position escamotée,
des deuxièmes moyens de blocage configurés pour empêcher un retour du dossier (4) en position d'utilisation quand l'organe (100) de butée est en position de dégagement et autoriser un retour du dossier (4) en position d'utilisation quand l'organe (100) de butée est en position d'engagement, et
des troisièmes moyens de blocage configurés pour bloquer l'organe (100) de butée en position de dégagement quand l'assise (2) est hors de la zone de coulissement prédéterminée et permettre le retour de l'organe (100) de butée en position d'engagement quand l'assise (2) est dans la zone de coulissement prédéterminée.

2. Siège (1) selon la revendication 1, dans lequel le siège (1) comprend des quatrièmes moyens de blocage, les quatrièmes moyens de blocage étant configurés pour empêcher un déplacement de l'organe (100) de butée en position de dégagement quand le dossier (4) est dans une position intermédiaire comprise entre la position d'utilisation et la position escamotée.

3. Siège selon la revendication 1 ou 2, dans lequel le siège (1) comprend des premiers moyens de verrouillage ayant un premier verrou (218) mobile entre une position de verrouillage dans laquelle le premier verrou (218) empêche de désolidariser l'assise (2) du rail (6) de guidage tout en permettant à l'assise (2) de coulisser le long du rail (6) de guidage, et une position de déverrouillage dans laquelle le premier verrou (218) autorise une désolidarisation de l'assise (2) et du rail (6) de guidage, et un actionneur (202) commun au premier verrou (218) et à l'organe (100) de butée, l'actionneur (202) étant mobile successivement entre une position de repos dans laquelle l'actionneur (202) déplace le premier verrou (218) en position de verrouillage et permet à l'organe (100) de butée d'être en position d'engagement, une position de coulissement dans laquelle l'actionneur (202) laisse le premier verrou (218) en position de verrouillage et déplace l'organe (100) de butée en position de dégagement, et une position d'extraction dans laquelle l'actionneur (202) maintient l'organe (100) de butée en position de dégagement et déplace le premier verrou (218) en position de déverrouillage.

4. Siège (1) selon la revendication 3, dans lequel le siège (1) comprend des deuxièmes moyens de verrouillage ayant un deuxième verrou (220) mobile entre une position de verrouillage dans laquelle le deuxième verrou (220) immobilise l'assise (2) le long du rail (6) de guidage et une position de déverrouillage dans laquelle le deuxième verrou (220) autorise un coulissement de l'assise (2) le long du rail (6) de guidage, l'actionneur (202) étant commun au premier verrou (218), au deuxième verrou (220) et à l'organe (100) de butée, et l'actionneur (202) étant successivement mobile la position de repos dans laquelle l'actionneur (202) déplace les premier et deuxième verrous (218, 220) en position de verrouillage et permet à l'organe (100) de butée d'être en position d'engagement, une position de réglage longitudinal dans laquelle l'actionneur (202) déplace le deuxième verrou (220) en position de déverrouillage et laisse l'organe (100) de butée en position d'engagement et le premier verrou (218) en position de verrouillage, la position de coulissement dans laquelle l'actionneur (202) déplace l'organe (100) de butée en position de dégagement et maintient le deuxième verrou (220) en position de déverrouillage et le premier verrou (218) en position de verrouillage, et la position d'extraction dans laquelle l'actionneur (202) déplace le premier verrou (218) en position de déverrouillage et maintient le deuxième verrou (220) en position de déverrouillage et l'organe (100) de butée en position de dégagement.

5. Siège (1) selon l'une des revendications 1 à 4, dans lequel les deuxièmes moyens de blocage comprennent un organe (102) de sécurité, mobile entre une position de blocage dans laquelle l'organe (102) de sécurité bloque le dossier (4) en position escamotée, et une position de déblocage dans laquelle l'organe (102) de sécurité permet un retour du dossier (4) en position d'utilisation, et des moyens de synchronisation adaptés pour synchroniser un déplacement de l'organe (100) de butée et de l'organe (102) de sécurité, de sorte que l'organe (102) de sécurité soit en position de déblocage quand l'organe (100) de butée est position d'engagement et que l'organe (102) de sécurité soit en position de blocage quand l'organe (100) de butée est en position de dégagement, et dans lequel les premiers moyens de blocage comprennent une came (114) solidaire du dossier (4), la came (114) étant conformée pour former obstacle au déplacement de l'organe (102) de sécurité de la position de déblocage à la position de blocage quand le dossier (4) est en position d'utilisation et pour s'effacer de la trajectoire de l'organe (102) de sécurité entre la position de déblocage et la position de blocage quand le dossier (4) est en position escamotée.

6. Siège (1) selon la revendication 5, dans lequel les moyens de synchronisation comprennent un organe (108) de transmission mobile en rotation entre une première position et une deuxième position, et des moyens de liaison reliant l'organe (108) de transmission à l'organe (100) de butée et à l'organe (102) de sécurité de sorte qu'un déplacement de l'organe (108) de transmission de la première position à la deuxième position provoque un déplacement de l'organe (100) de butée de la position d'engagement à la position de dégagement et de l'organe (102) de sécurité de la position de déblocage à la position de blocage, et dans lequel le siège (1) comprend des moyens d'entraînement destinés à entraîner l'organe (108) de transmission de la première position à la deuxième position, en vue de déplacer l'organe (100) de butée de la position d'engagement à la position de dégagement.

7. Siège (1) selon la revendication 6, dans lequel les moyens d'entraînement comprennent un actionneur (202) ayant une portion (204) à crémaillère, un levier (206) rotatif destiné à prendre appui sur l'organe (108) de transmission pour déplacer l'organe (108) de transmission de la première position à la deuxième position, le levier (206) rotatif ayant une portion (208) d'engrenage engrenant, directement ou indirectement, avec la portion (204) à crémaillère.

8. Siège (1) selon l'une des revendications 1 à 7, dans lequel le mécanisme (10) de limitation de coulissement comprend plusieurs paires de surfaces (72) de butée, chaque paire de surfaces (72) de butée délimitant une zone distincte de coulissement prédéterminée de l'assise (2) le long du rail (6) de guidage.

9. Véhicule, notamment véhicule automobile, comprenant un siège (1) selon l'une des revendications 1 à 8.

## Patentansprüche

1. Sitz (1) für ein Fahrzeug, der eine Rückenlehne (4), eine Sitzfläche (2) und eine Führungsschiene (6) umfasst, die am Boden des Fahrzeugs befestigt werden kann, wobei die Rückenlehne (4) in Bezug auf die Sitzfläche (2) zwischen einer Gebrauchsstellung und einer eingeklappten Stellung beweglich ist, wobei die Rückenlehne (4) und die Sitzfläche (2) zusammen entlang der Führungsschiene (6) translationsbeweglich sind, **dadurch gekennzeichnet, dass** der Sitz (1) umfasst
einen Mechanismus (10) zum Begrenzen von Gleiten der Sitzfläche (2) entlang der Führungsschiene (6) auf einen vorbestimmten Gleitbereich, umfassend zwei Anschlagflächen (72), die zwischen sich den vorbestimmten Gleitbereich abgrenzen, und ein Anschlagelement (100), das zwischen einer Eingriffsstellung, in der das Anschlagelement (100) dazu vorgesehen ist, gegen die eine oder die andere der zwei Anschlagflächen (72) in Anlage zu kommen, um ein Gleiten der Sitzfläche (2) außerhalb des vorbestimmten Gleitbereichs zu verhindern, und einer Ausrückstellung beweglich ist, in der sich das Anschlagelement (100) in Bezug auf die Anschlagflächen (72) in Versatz befindet, um ein Gleiten der Sitzfläche (2) innerhalb und außerhalb des vorbestimmten Gleitbereichs zu ermöglichen,
erste Blockiermittel, die dafür ausgebildet sind, eine Verlagerung des Anschlagelements (100) in Ausrückstellung zu verhindern, wenn sich die Rückenlehne (4) in Gebrauchsstellung befindet, und die Verlagerung des Anschlagelements (100) in Ausrückstellung zu gestatten, wenn sich die Rückenlehne (4) in eingeklappter Stellung befindet,
zweite Blockiermittel, die dafür ausgebildet sind, eine Rückkehr der Rückenlehne (4) in Gebrauchsstellung zu verhindern, wenn sich das Anschlagelement (100) in Ausrückstellung befindet, und eine Rückkehr der Rückenlehne (4) in Gebrauchsstellung zu gestatten, wenn sich das Anschlagelement (100) in Eingriffsstellung befindet, und
dritte Blockiermittel, die dafür ausgebildet sind, das Anschlagelement (100) in Ausrückstellung zu blockieren, wenn sich die Sitzfläche (2) außerhalb des vorbestimmten Gleitbereichs befindet, und die Rückkehr des Anschlagelements (100) in Eingriffsstellung zu ermöglichen, wenn sich die Sitzfläche (2) in dem vorbestimmten Gleitbereich befindet.

2. Sitz (1) nach Anspruch 1, wobei der Sitz (1) vierte Blockiermittel umfasst, wobei die vierten Blockiermittel dafür ausgebildet sind, eine Verlagerung des Anschlagelements (100) in Ausrückstellung zu verhindern, wenn sich die Rückenlehne (4) in einer Zwischenstellung zwischen der Gebrauchsstellung und der eingeklappten Stellung befindet.

3. Sitz nach Anspruch 1 oder 2, wobei der Sitz (1) erste Verriegelungsmittel umfasst, die einen ersten Riegel (218) aufweisen, der zwischen einer Verriegelungsstellung, in der der erste Riegel (218) verhindert, dass die Sitzfläche (2) von der Führungsschiene (6) gelöst wird, während er es gleichzeitig der Sitzfläche (2) ermöglicht, entlang der Führungsschiene (6) zu gleiten, und einer Entriegelungsstellung beweglich ist, in der der erste Riegel (218) ein Lösen der Sitzfläche (2) und der Führungsschiene (6) gestattet, und einen Aktor (202), der dem ersten Riegel (218) und dem Anschlagelement (100) gemein ist, wobei der Aktor (202) nacheinander zwischen einer Ruhestellung, in der der Aktor (202) den ersten Riegel (218) in Verriegelungsstellung verlagert und es dem Anschlagelement (100) ermöglicht, sich in Eingriffsstellung zu befinden, einer Gleitstellung, in der der Aktor (202) den ersten Riegel (218) in Verriegelungsstellung belässt und das Anschlagelement (100) in Ausrückstellung verlagert, und einer Auszugsstellung beweglich ist, in der der Aktor (202) das Anschlagelement (100) in Ausrückstellung hält und den ersten Riegel (218) in Entriegelungsstellung verlagert.

4. Sitz (1) nach Anspruch 3, wobei der Sitz (1) zweite Verriegelungsmittel umfasst, die einen zweiten Riegel (220) aufweisen, der zwischen einer Verriegelungsstellung, in der der zweite Riegel (220) die Sitzfläche (2) entlang der Führungsschiene (6) immobilisiert, und einer Entriegelungsstellung beweglich ist, in der der zweite Riegel (220) ein Gleiten der Sitzfläche (2) entlang der Führungsschiene (6) gestattet, wobei der Aktor (202) dem ersten Riegel (218), dem zweiten Riegel (220) und dem Anschlagelement (100) gemein ist, und wobei der Aktor (202) nacheinander zwischen der Ruhestellung, in der der Aktor (202) den ersten und zweiten Riegel (218, 220) in Verriegelungsstellung verlagert und es dem Anschlagelement (100) ermöglicht, sich in Eingriffsstellung zu befinden, einer Längseinstellstellung, in der der Aktor (202) den zweiten Riegel (220) in Entriegelungsstellung verlagert und das Anschlagelement (100) in Eingriffsstellung und den ersten Riegel (218) in Verriegelungsstellung belässt, der Gleitstellung, in der der Aktor (202) das Anschlagelement (100) in Ausrückstellung verlagert und den zweiten Riegel (220) in Entriegelungsstellung und den ersten Riegel (218) in Verriegelungsstellung hält, und der Auszugsstellung beweglich ist, in der der Aktor (202) den ersten Riegel (218) in Entriegelungsstellung verlagert und den zweiten Riegel (220) in Entriegelungsstellung und das Anschlagelement (100) in Ausrückstellung hält.

5. Sitz (1) nach einem der Ansprüche 1 bis 4, wobei die zweiten Blockiermittel ein Sicherungselement (102) umfassen, das zwischen einer Blockierstellung, in der das Sicherungselement (102) die Rückenlehne (4) in eingeklappter Stellung blockiert, und einer Freigabestellung beweglich ist, in der das Sicherungselement (102) ein Rückkehren der Rückenlehne (4) in Gebrauchsstellung ermöglicht, und Synchronisierungsmittel, die dafür eingerichtet sind, eine Verlagerung des Anschlagelements (100) und des Sicherungselements (102) derart zu synchronisieren, dass sich das Sicherungselement (102) in Freigabestellung befindet, wenn sich das Anschlagelement (100) in Eingriffsstellung befindet, und dass sich das Sicherungselement (102) in Blockierstellung befindet, wenn sich das Anschlagelement (100) in Ausrückstellung befindet, und wobei die ersten Blockiermittel eine Nocke (114) umfassen, die fest mit der Rückenlehne (4) verbunden ist, wobei die Nocke (114) dafür ausgestaltet ist, ein Hindernis für die Verlagerung des Sicherungselements (102) von der Freigabestellung zur Blockierstellung zu bilden, wenn sich die Rückenlehne (4) in Gebrauchsstellung befindet, und dafür, sich aus der Bahn des Sicherungselements (102) zwischen der Freigabestellung und der Blockierstellung zurückzuziehen, wenn sich die Rückenlehne (4) in eingeklappter Stellung befindet.

6. Sitz (1) nach Anspruch 5, wobei die Synchronisierungsmittel ein Übertragungselement (108) umfassen, das zwischen einer ersten Stellung und einer zweiten Stellung drehbeweglich ist, und Verbindungsmittel, die das Übertragungselement (108) mit dem Anschlagelement (100) und mit dem Sicherungselement (102) verbinden, derart, dass eine Verlagerung des Übertragungselements (108) von der ersten Stellung zur zweiten Stellung eine Verlagerung des Anschlagelements (100) von der Eingriffsstellung zur Ausrückstellung, und des Sicherungselements (102) von der Freigabestellung zur Blockierstellung bewirkt, und wobei der Sitz (1) Antriebsmittel umfasst, die dazu vorgesehen sind, das Übertragungselement (108) von der ersten Stellung zur zweiten Stellung zu treiben, um das Anschlagelement (100) von der Eingriffsstellung zur Ausrückstellung zu verlagern.

7. Sitz (1) nach Anspruch 6, wobei die Antriebsmittel einen Aktor (202) umfassen, der einen Zahnstangenabschnitt (204) aufweist, einen Drehhebel (206), der dazu vorgesehen ist, am Übertragungselement (108) Anlage zu nehmen, um das Übertragungselement (108) von der ersten Stellung zur zweiten Stellung zu verlagern, wobei der Drehhebel (206) einen Verzahnungsabschnitt (208) aufweist, der direkt oder indirekt mit dem Zahnstangenabschnitt (204) ineinandergreift.

8. Sitz (1) nach einem der Ansprüche 1 bis 7, wobei der Gleitbegrenzungsmechanismus (10) mehrere Anschlagflächenpaare (72) umfasst, wobei jedes Anschlagflächenpaar (72) einen eigenen vorbestimmten Gleitbereich der Sitzfläche (2) entlang der Führungsschiene (6) abgrenzt.

9. Fahrzeug, insbesondere Kraftfahrzeug, das einen Sitz (1) nach einem der Ansprüche 1 bis 8 umfasst.

## Claims

1. A seat (1) for a vehicle, comprising a backrest (4), a seat (2) and a guide rail (6) which can be fixed to the floor of the vehicle, the backrest (4) being movable relative to the seat (2) between a use position and a retracted position, and the backrest (4) and the seat (2) being together movable in translation along the guide rail (6), **characterized in that** the seat (1) comprises
a mechanism (10) for limiting the sliding of the seat (2) along the guide rail (6) to a predetermined sliding area, comprising two abutment surfaces (72) delimiting therebetween the predetermined sliding area, and an abutment member (100) movable between an engaged position in which the abutment member (100) is intended to bear against either of the two abutment surfaces (72) in order to prevent a sliding of the seat (2) out of said predetermined sliding area, and a disengaged position in which the abutment member (100) is offset relative to the abutment surfaces (72) so as to allow a sliding of the seat (2) within and out of the predetermined sliding area,
first blocking means configured to prevent displacement of the abutment member (100) to the disengaged position when the backrest (4) is in the use position and to allow displacement of the abutment member (100) to the disengaged position when the backrest (4) is in the retracted position,
second blocking means configured to prevent the backrest (4) from returning to the use position when the abutment member (100) is in the disengaged position and to allow the backrest (4) to return to the use position when the abutment member (100) is in the engaged position, and
third blocking means configured to block the abutment member (100) in the disengaged position when the seat (2) is out of the predetermined sliding area and to allow the abutment member (100) to return to the engaged position when the seat (2) is in the predetermined sliding area.

2. The seat (1) according to claim 1, wherein the seat (1) comprises fourth blocking means, the fourth blocking means being configured to prevent displacement of the abutment member (100) to the disengaged position when the backrest (4) is in an intermediate position comprised between the use position and the retracted position.

3. The seat according to claim 1 or 2, wherein the seat (1) comprises first locking means having a first movable lock (218) between a locked position in which the first lock (218) prevents separating the seat (2) from the guide rail (6) while allowing the seat (2) to slide along the guide rail (6), and an unlocked position in which the first lock (218) allows separating the seat (2) from the guide rail (6), and an actuator (202) common to the first lock (218) and to the abutment member (100), the actuator (202) being movable successively between a rest position in which the actuator (202) moves the first lock (218) to the locked position and allows the abutment member (100) to be in the engaged position, a sliding position in which the actuator (202) lets the first lock (218) in the locked position and moves the abutment member (100) to the disengaged position, and an extraction position in which the actuator (202) maintains the abutment member (100) in the disengaged position and moves the first lock (218) to the unlocked position.

4. The seat (1) according to claim 3, wherein the seat (1) comprises second locking means having a second lock (220) movable between a locked position in which the second lock (220) immobilizes the seat (2) along the guide rail (6) and an unlocked position in which the second lock (220) allows a sliding of the seat (2) along the guide rail (6), the actuator (202) being common to the first lock (218), to the second lock (220) and to the abutment member (100), and the actuator (202) being successively movable between the rest position in which the actuator (202) moves the first and second locks (218, 220) in the locked position and allows the abutment member (100) to be in the engaged position, a longitudinal setting position in which the actuator (202) moves the second lock (220) to the unlocked position and lets the abutment member (100) in the engaged position and the first lock (218) in the locked position, the sliding position in which the actuator (202) moves the abutment member (100) to the disengaged position and maintains the second lock (220) in the unlocked position and the first lock (218) in the locked position, and the extraction position in which the actuator (202) moves the first lock (218) to the unlocked position and maintains the second lock (220) in the unlocked position and the abutment member (100) in the disengaged position.

5. The seat (1) according to any of claims 1 to 4, wherein the second blocking means comprise a safety member (102), movable between a blocked position in which the safety member (102) blocks the backrest (4) in the retracted position, and an unblocked position in which the safety member (102) allows the backrest (4) to return to the use position, and synchronization means adapted to synchronize a displacement of the abutment member (100) and the safety member (102), so that the safety member (102) is in the unblocked position when the abutment member (100) is in the engaged position and so that the safety member (102) is in the blocked position when the abutment member (100) is in the disengaged position, and in which the first blocking means comprise a cam (114) secured to the backrest (4), the cam (114) being shaped to form an obstacle to the displacement of the safety member (102) from the unblocked position to the blocked position when the backrest (4) is in the use position and to disappear from the path of the safety member (102) between the unblocked position and the blocked position when the backrest (4) is in the retracted position.

6. The seat (1) according to claim 5, wherein the synchronization means comprise a transmission member (108) movable in rotation between a first position and a second position, and connecting means connecting the transmission member (108) to the abutment member (100) and to the safety member (102) so that a displacement of the transmission member (108) from the first position to the second position causes a displacement of the abutment member (100) from the engaged position to the disengaged position and of the safety member (102) from the unblocked position to the blocked position, and wherein the seat (1) comprises drive means for driving the transmission member (108) from the first position to the second position, in order to move the abutment member (100) from the engaged position to the disengaged position.

7. The seat (1) according to claim 6, wherein the drive means comprise an actuator (202) having a rack portion (204), a rotatable lever (206) intended to bear on the transmission member (108) in order to move the transmission member (108) from the first position to the second position, the rotary lever (206) having a gear portion (208) meshing, directly or indirectly, with the rack portion (204).

8. The seat (1) according to any of claims 1 to 7, wherein the sliding limitation mechanism (10) comprises a plurality of pairs of abutment surfaces (72), each pair of abutment surfaces (72) delimiting a predetermined separate sliding area of the seat (2) along the guide rail (6).

9. A vehicle, in particular a motor vehicle, comprising a seat (1) according to any of claims 1 to 8.
